## Europäisches Patentamt
## European Patent Office
## Office européen des brevets

(11) Publication number: **0 083 557**
**B1**

(12) **EUROPEAN PATENT SPECIFICATION**

(45) Date of publication of patent specification: **01.04.87**

(51) Int. Cl.⁴: **B 60 K 9/00, B 60 T 1/10**

(21) Application number: **82830312.3**

(22) Date of filing: **27.12.82**

(54) **Device for recovering the kinetic energy of a motor vehicle during braking and exploiting same during speeding up.**

(30) Priority: **06.01.82 IT 6700682**

(43) Date of publication of application:
**13.07.83 Bulletin 83/28**

(45) Publication of the grant of the patent:
**01.04.87 Bulletin 87/14**

(84) Designated Contracting States:
**BE DE FR GB IT LU NL**

(56) References cited:
**EP-A-0 004 194**
**FR-A-2 019 134**
**FR-A-2 031 271**
**GB-A-1 307 088**
**GB-A-1 339 140**
**US-A-2 348 053**

(73) Proprietor: **Ferrero S.p.A.**
**Piazzale Pietro Ferrero 1**
**I-12051 Alba (Cuneo) (IT)**

(72) Inventor: **Ferrero, Pietro**
**Via Valle Balbiana 15**
**I-10025 Pino Torinese (Torino) (IT)**

(74) Representative: **Bosotti, Luciano et al**
**c/o Jacobacci-Casetta & Perani S.p.A. Via Alfieri,
17**
**I-10121 Torino (IT)**

Courier Press, Leamington Spa, England.

## Description

The present invention relates to a device for recovering the kinetic energy in a wheeled motor vehicle driven by an internal combustion engine and having at least two axles, said device comprising:

— a group of reversible dynamo-electric machines rotatably coupled with the wheels of one of the axles of the vehicle,
— electrical energy storage means,
— sensor means associated with the brake pedal and with the accelerator pedal of the vehicle to detect the actuation thereof, and
— a control circuit controlled by the sensor means and arranged to operate the dynamo-electric machines as generators to supply the storage means during braking of the vehicle and as motors supplied by the storage means.

Such a device is disclosed in EP—A—0 044 194, where the suggestion is given of using dynamo-electric machines of the permanent-magnet type and of using chopper devices to regulate the supply of electrical energy from the dynamo-electric machines.

A somewhat similar device is also shown in FR—A—2 019 134 and US—A—2 348 053 which both relate to purely electrical vehicles. In US—A—2 348 053 series connection of the dynamo-electric machines associated with the wheels of one axle of a purely electrical vehicle (i.e. a vehicle not provided with an internal combustion engine) is taught.

All those prior art documents show use of a device which permits the recovery, during braking, of the kinetic energy of the motor vehicle which is normally dissipated in the form of heat in the brakes. The energy recovered may be stored and used as drive energy of the vehicle.

The inherent problem of the present invention is that of providing an improved device of the type outlined above, which can be effectively and reliably used in a wheeled motor vehicle driven by an internal combustion engine, whereby the energy recovered during braking can be used a starting energy during acceleration avoiding the drawing of peaks of power from the engine of the vehicle.

According to the present invention, the solution to this problem is provided by means of a device of the type outlined above having the features indicated in the characterizing portion of claim 1. Some further advantageous features are indicated in the sub-claims appended thereto.

The invention will now be described, purely by way of non-limiting example, with reference to the appended drawings, in which:

— Figure 1 is a schematic perspective view of a motor vehicle provided with a device according to the invention, and
— Figure 2 is a block schematic diagram illustrating the component parts of the device itself.

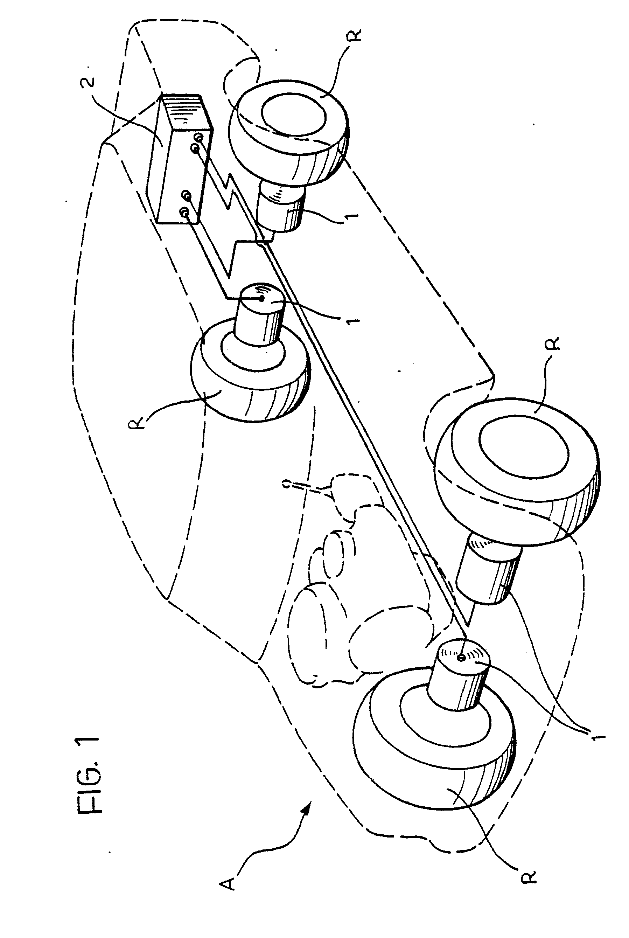

Figure 1 shows a motor vehicle, generally indicated A, the wheels of which are rotatably coupled with reversible dynamo-electric machines 1 constituted, in the embodiment illustrated, by permanent-magnet dynamo-electric machines keyed directly onto the half shafts of the vehicle.

The use of permanent-magnet machines and the disposition schematically illustrated ensure that the system for recovering kinetic energy is light and does not adversely affect the payload and/or the suspension with an excessive increase in the unsprung masses.

The dynamo-electric machines 1 are connected to a control and energy-storage system generally indicated 2, in such a manner that the machines 1 associated with the wheels of each axle of the motor vehicle A are connected in series with each other.

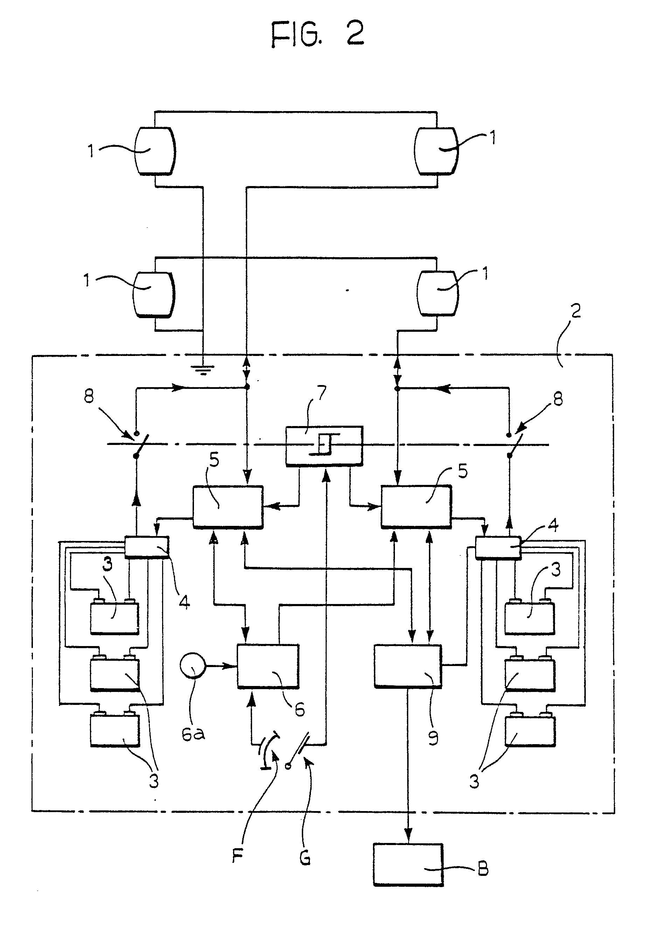

The internal structure of the system 2 is illustrated in detail in Figure 2.

In this Figure electro-chemical cells 3 are shown which are connected through switch circuits 4 to the dynamo-electric machines 1.

By 5 are indicated chopper inverters interposed between the dynamo-electric machines 1 and the switch circuits 4 in such a manner that the machines 1 associated with each axle of the motor vehicle A are connected to a separate group of cells 3 through a respective inverter 5.

The inverters 5 act as power transfer devices and are controlled by a sensor 6 intended to detect the actuation and the position of the brake pedal of the motor vehicle, indicated F.

A detector 6a is associated with the sensor 6 and is sensitive to the loads pressing on the individual axles of the motor vehicle A.

A further sensor indicated 7 is intended to detect the actuation and the position of the accelerator pedal of the motor vehicle, indicated G.

As shown schematically in the drawing, the sensor 7, through switches 8, controls the connection of the dynamo-electric machines 1 to the electrical energy storage means constituted by the cells 3 and the switch circuits 4.

A threshold circuit indicated 9 is sensitive to the level of charge of the energy storage means and is connected, as well as to the chopper inverters 5, also to the hydraulic braking circuit of the vehicle, schematically indicated B.

The device according to the invention is intended to be used during the braking and acceleration phases of the vehicle.

During braking the brake pedal F is pressed while the accelerator pedal G is released.

The sensor 6 thus connects the dynamo-electric machines 1 through the chopper inverters 5, to the cells 3 and the switch circuits 4, while sensor 7 keeps the switches 8 in their open positions.

With this arrangement of connections, the dynamo-electric machines 1 act as generators which supply the batteries 3 with counter electromotive force, converting the kinetic energy of the motor vehicle into electrical energy which is stored in the cells 3.

During the braking action, the sensor 6 detects the position of the brake pedal F and varies the duty cycle of the inverters 5 in dependence on this position so as to regulate the level of supply of electrical energy by the machines 1 acting as generators and to graduate the braking of the vehicle.

The sensor 6 controls the inverters 5 in dependence on the signal coming from the sensor 6a so as to divide the braking power between the two axles of the motor vehicle A in dependence on the load experienced thereby.

The switch circuits 4 are so arranged that during braking, they place the cells 3 connected thereto electrically in parallel with each other so as to facilitate the absorption of the charging current produced by the electrical machines 1.

The chopper inverters 5 are preferably of the step-down type and are able to operate with high efficiency up to a voltage level about equal to the charge voltage of the cells 3.

The threshold circuit 9 connected to the inverters 5 and to the electrical energy storage means 3, 4, is able to detect when the level of supply from the electrical machines 1 falls below a predetermined value.

In this situation, or in any situation in which the braking action produced by the dynamo-electric machines 1 operating as generators is considered insufficient, the threshold circuit 9 brings about the actuation of the hydraulic braking circuit B of the vehicle.

The series connection of the electrical machines 1 associated with each axle of the motor vehicle allows a high efficiency to be achieved and reduces the required operating range of the inverters.

When the accelerator pedal G is pressed and the brake pedal F is released, for example to restart the vehicle after stopping, the sensor 7 closes the switches 8, simultaneously deactivating the chopper inverters 5.

In this manner the electrical machines 1 are supplied with the electrical energy stored in the cells 3.

The electrical machines 1 operate as motors which provide mechanical energy during starting and acceleration of the vehicle.

The electrical machines 1 thus cooperate with the internal combustion engine of the motor vehicle, considerably reducing the power drawn from the internal combustion engine during the starting and accelerating phase.

During acceleration, the switch circuits 4 place the cells connected thereto electrically in series with each other so as to obtain a high starting voltage for the electrical machines 1 operating as motors.

In order to avoid too rapid an acceleration, the sensor 7 includes regulator means for graduating the level of intervention of the electrical machines 1 in assisting the internal combustion engine during start off.

The sensor 7 normally includes means sensitive to the velocity of the motor vehicle and/or to the speed of rotation of the internal combustion engine of the motor vehicle itself. Thus it is possible, for example, to control the opening of the switches 8 at the end of acceleration so as to avoid the electrical machines 1 taking an excessive quantity of electrical energy from the cells 3 during their operation as motors.

**Claims**

1. Device for recovering kinetic energy in a wheeled motor vehicle driven by an internal combustion engine and having at least two axles, said device comprising:

— a group of reversible dynamo-electric machines (1) rotatably coupled with the wheels of one of the axles of the vehicle,
— electrical energy storage means (3),
— sensor means (6, 7) associated with the brake pedal (F) and with the accelerator pedal (G) of the vehicle, to detect the actuation thereof and
— a control circuit (5, 8, 9) controlled by the sensor means (6, 7) and arranged to operate the dynamo-electric machines (1) as generators to supply the storage means (3) during braking of the vehicle and as motors supplied by the storage means (3),

characterized in that said control circuit is arranged to supply said dynamo-electric machines (1) to act as motors during acceleration of the vehicle driven by said internal combustion engine, that there is provided one group of reversible dynamo-electric machines (1) disposed electrically in series for each of said axles of the vehicle and in that the control circuit includes a separate unit for each group of dynamo-electric machines (1) connected in series.

2. Device according to Claim 1, characterized in that the reversible dynamo-electric machines (1) are of the permanent-magnet type and in that these dynamo-electric machines (1) are keyed to the half shafts of the vehicle.

3. Device according to Claim 1 or Claim 2, characterized in that the control circuit includes chopper inverters (5) the operating cycle of which is variable in dependence on the position of the brake pedal (F) whereby to regulate the supply of electrical energy from the dynamo-electric machines (1) operating as generators and graduate the braking of the vehicle.

4. Device according to Claim 1, characterized in that the control circuit includes comparator means (9) for detecting insufficient braking action produced by the dynamo-electric machines (1) acting as generators whereby to actuate the hydraulic braking system of the vehicle.

5. Device according to Claim 1 or Claim 2, characterized in that the storage means include electro-chemical cells (3) associated with switch circuits (4) each of which is connected to a group of cells (3) of this group to be connected in parallel or in series with each other according to whether the vehicle is respectively braking or accelerating.

**Patentansprüche**

1. Vorrichtung zur Wiedergewinnung von kinetischer Energie bei einem von einer Brennkraftmaschine angetriebenen Kraftfahrzeug mit zumindest zwei Achsen, wobei die Vorrichtung umfasst:

— eine Gruppe, von reversiblen dynamoelektrischen Maschinen (1), die drehbar mit den Rädern einer der Achsen des Fahrzeuges gekuppelt sind,
— elektrische Energiespeichermittel (3),
— Sensormittel (6, 7), die dem Bremspedal (F) bzw. dem Gaspedal (G) des Fahrzeuges zugeordnet sind, um deren Betätigung zu erfassen, und
— einen Steuerkreis (5, 8, 9), gesteuert durch die Sensormittel (6, 7) und angeordnet für die Betätigung der dynamoelektrischen Maschinen (1), wie Generatoren, zur Versorgung der Speichermittel (3) während des Bremsens des Fahrzeuges, und wie von den Speichermitteln (3) versorgte Motoren,

dadurch gekennzeichnet, dass der Steuerkreis zur Versorgung der dynamoelektrischen Maschinen (1) angeordnet sind, um während der Beschleunigung des von der Brennkraftmaschine angetriebenen Fahrzeuges als Motoren zu wirken, dass eine Gruppe von reversiblen, dynamoelektrischen Maschinen (1) vorgesehen ist, die für jede Achse des Fahrzeuges elektrisch in Reihe geschaltet sind, und dass der Steuerkreis eine getrennte Einheit für jede Gruppe von in Reihe geschalteten dynamoelektrischen Maschinen (1) umfasst.

2. Vorrichtung nach Anspruch 1, dadurch gekennzeichnet, dass die reversiblen dynamoelektrischen Maschinen (1) vom Permanentmagnettyp sind, und dass diese dynamoelektrischen Maschinen (1) auf die Halbachsen des Fahrzeuges aufgekeilt sind.

3. Vorrichtung nach Anspruch 1 oder 2, dadurch gekennzeichnet, dass der Steuerkreis Chopperinverter (5) umfasst, deren Betriebszyklus in Abhängigkeit von der Lage des Bremspedals (F) variabel ist, um die elektrische Energieversorgung durch die dynamoelektrischen Maschinen (1), die als Generatoren arbeiten, zu regeln und das Bremsen des Fahrzeuges zu graduieren.

4. Vorrichtung nach Anspruch 1, dadurch gekennzeichnet, dass der Steuerkreis Vergleichermittel (9) umfasst, um eine unzureichende Bremswirkung festzustellen, erzeugt durch die als Generatoren wirkenden dynamoelektrischen Maschinen (1), um dadurch das hydraulische Bremssystem des Fahrzeuges zu betätigen.

5. Vorrichtung nach Anspruch 1 oder 2, dadurch gekennzeichnet, dass die Speichermittel elektrochemische Zellen (3) umfassen, die zur Schaltkreisen (4) gehören, von denen jeder mit einer Gruppe von Zellen (3) dieser Gruppe verbunden ist, um parallel in Reihe miteinander geschaltet zu werden, je nachdem, ob das Fahrzeug gebremst oder beschleunigt wird.

**Revendications**

1. Dispositif pour la récupération d'énergie cinétique dans un véhicule automobile à roues entraîné par un moteur à combustion interne et comportant au moins deux essieux ledit dispositif comprenant:

— un groupe de machines dynamo-électriques (1) réversibles accouplées en rotation avec les roues de l'un des essieux du véhicule,
— des moyens de stockage d'énergie électrique (3),
— des moyens capteurs (6, 7) associés à la pédale de frein (F) et à la pédale d'accélérateur (G) du véhicule pour en déceler l'actionnement et
— un circuit de commande (5, 8, 9) commandé par les moyens capteurs (6, 7) et agencés pour faire fonctionner les machines dynamo-électriques (1) en génératrices pour alimenter les moyens de stockage (3) pendant freinage du véhicule et en moteurs alimentés par les moyens de stockage (3),

caractérisé en ce que ledit circuit de commande est agencé pour alimenter lesdites machines dynamo-électriques (1) pour qu'elles agissent en moteur pendant l'accélération du véhicule entraîné par ledit moteur à combustion interne, qu'il est prévu un groupe de machines dynamo-électriques (1) réversibles disposées électriquement en série pour chacun desdits essieux du véhicule et en ce que le circuit de commande comporte une unité indépendante par groupe de machines dynamo-électriques (1) montées en série.

2. Dispositif selon la revendication 1, caractérisé en ce que les machines dynamo-électriques réversibles (1) sont du type à aimant permanent et en ce que ces machines dynamo-électriques (1) sont clavetées sur les demi-arbres du véhicule.

3. Dispositif selon la revendication 1 ou la revendication 2, caractérisé en ce que le circuit de commande comporte des onduleurs hacheurs (5) dont le cycle de fonctionnement est variable en fonction de la position de la pédale de frein (F) de manière à réguler l'arrivée d'énergie électrique à partir des machines dynamo-électriques (1) fonctionnant en génératrices et à rendre progressif le freinage du véhicule.

4. Dispositif selon la revendication 1, caractérisé en ce que le circuit de commande comporte des moyens comparateurs (9) pour déceler un effet de freinage insuffisant engendré par les machines dynamo-électriques (1) agissant en génératrices de façon à actionner le dispositif de freinage hydraulique du véhicule.

5. Dispositif selon la revendication 1 ou la revendication 2, caractérisé en ce que les moyens de stockage comportent des éléments électrochimiques (3) associés à des circuits de commutation (4) dont chacun est relié à un groupe d'éléments (3) de ce groupe à relier en parallèle ou en série entre eux selon que le véhicule est respectivement en cours de freinage ou d'accélération.

FIG. 1

0 083 557

# FIG. 2